# EUROPEAN PATENT APPLICATION

(11) **EP 3 045 835 A1**
(43) Date of publication of application: **20.07.2016**
(21) Application number: 16151971.5
(22) Date of filing: 19.01.2016
(51) Int. Cl.: F24F 13/22, F24F 12/00

(54) **MECHANICAL VENTILATION AND HEAT RECOVERY UNIT**

(30) Priority: 19.01.2015 GB 201500824
(71) Applicant: Vent-Axia Group Limited, Crawley, West Sussex RH10 9YX (GB)
(72) Inventor: Cottingham, Neil, West Sussex, RH109YX (GB); Saunders, Alan, West Sussex, RH109YX (GB)
(74) Representative: Boden, Keith McMurray

(57) **Abstract**

A mechanical ventilation and heat recovery unit including a drainage coupling at a drainage outlet for providing fluid connection to a drainage conduit, the drainage coupling comprising an outer, threaded drainage attachment for attachment to a first drainage fitting, and an inner spigot drainage attachment for attachment to a second drainage fitting.

## Description

The present invention relates to a mechanical ventilation and heat recovery (MVHR) unit.

MVHR units are utilized to transfer heat from warm, humid air which is expelled from an internal space, such as a dwelling, to colder air which is drawn into the internal space. This transfer is done using a heat exchanger, and several litres per hour of condensate can be generated depending upon the air flow and humidity rates.

These MVHR units include a drain attachment for draining the condensate. Current MVHR units have one of two types of drain attachments, either (i) a plain spigot, which allows for attachment of a flexible pipe, a self-sealing push-fit connector or an adhesive or solvent welded connection, or (ii) a male thread attachment, which allows for attachment of a drain fitting or bottle trap.

The present inventors have developed a drain coupling which provides for both types of drain attachment, thereby allowing greater flexibility in connecting to a drainage pipe.

Accordingly, the present inventor provides a mechanical ventilation and heat recovery unit including a drainage coupling at a drainage outlet for providing fluid connection to a drainage conduit, the drainage coupling comprising an outer, threaded drainage attachment for attachment to a first drainage fitting, and an inner spigot drainage attachment for attachment to a second drainage fitting.

Preferred embodiments of the present invention will now be described hereinbelow by way of example only with reference to the accompanying drawings, in which;

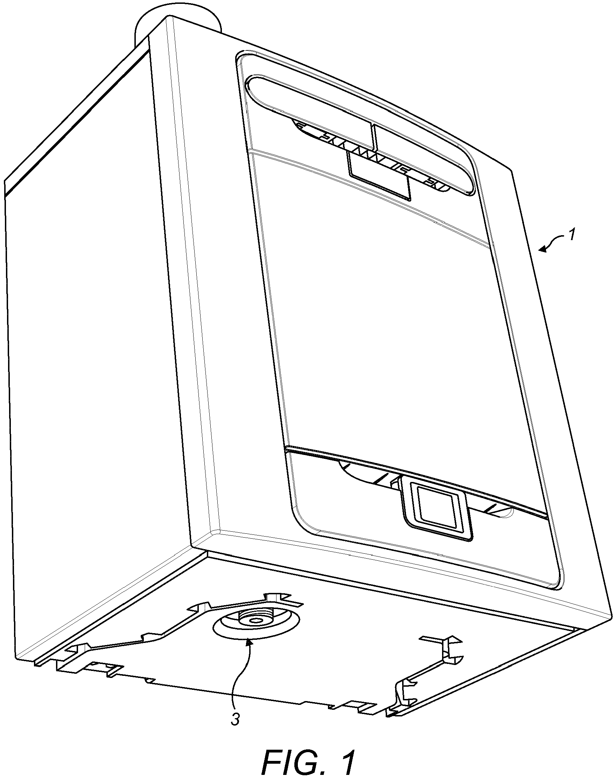

Figure 1 illustrates a perspective view of a MVHR unit in accordance with an embodiment of the present invention; and

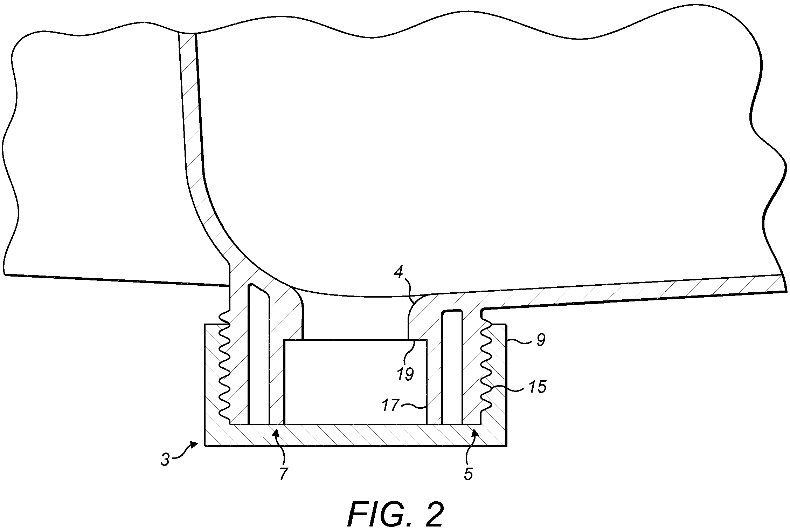

Figure 2 illustrates a fragmentary vertical sectional view through the drainage coupling of the MVHR unit of Figure 1.

The MVHR unit 1 includes a drainage coupling 3 at a drainage outlet 4 for providing fluid connection to a drainage pipe (not illustrated).

The drainage coupling 3 comprises an outer, threaded drainage attachment 5 for threaded attachment to a drainage fitting, an inner spigot drainage attachment 7 for adhesive or solvent welded attachment to a drainage fitting, and a threaded cap 9 which is threadedly attached to the outer drainage attachment 5 during transit in order to protect the drainage coupling 3 from damage.

In this embodiment the outer drainage attachment 5 comprises a male thread 15 as an attachment surface for threaded attachment to a drainage fitting (not illustrated), such as a bottle trap, having a female thread.

In this embodiment the outer drainage attachment 5 shrouds the inner drainage attachment 7, such as to protect the same from damage when the threaded cap 9 is removed, thereby ensuring that the inner drainage attachment 7 is protected, and so enabling attachment of a drainage fitting, such as an adhesive or solvent welded connection to a drainage pipe, to the inner drainage attachment 7 even if the outer drainage attachment 5 is damaged.

In this embodiment the inner drainage attachment 7 comprises a female attachment surface 17 at the inner periphery thereof, and includes an end stop 19 against which a drainage pipe can be abutted, so as to ensure an optimal length of drainage pipe extends into the inner drainage attachment for adhesive or solvent welded connection.

In this embodiment the inner drainage attachment 7 provides a flow channel of smaller radial dimension than the outer drainage attachment 5, and acts to guide the condensate flow through a central region of a threaded drainage fitting when fitted to the outer drainage attachment 5. This flow arrangement is particularly advantageous in that this construction can accommodate a failure at the seal of the threaded drainage fitting, with the inner drainage attachment 7 guiding the condensate flow away from the seal at the outer drainage attachment 5.

In this embodiment the inner and outer drainage attachments 5, 7 are arranged concentrically.

Finally, it will be understood that the present invention has been described in its preferred embodiments and can be modified in many different ways without departing from the scope of the invention as defined by the appended claims.

## Claims

1. A mechanical ventilation and heat recovery unit including a drainage coupling at a drainage outlet for providing fluid connection to a drainage conduit, the drainage coupling comprising an outer, threaded drainage attachment for attachment to a first drainage fitting, and an inner spigot drainage attachment for attachment to a second drainage fitting.

2. The mechanical ventilation and heat recovery unit of claim 1, wherein the drainage coupling further comprises a threaded cap which is threadedly attached to the outer drainage attachment during transit.

3. The mechanical ventilation and heat recovery unit of claim 1 or 2, wherein the outer drainage attachment comprises a male thread for threaded attachment to a drainage fitting, optionally a bottle trap, having a female thread.

4. The mechanical ventilation and heat recovery unit of any of claims 1 to 3, wherein the outer drainage attachment shrouds the inner drainage attachment to protect the same from damage.

5. The mechanical ventilation and heat recovery unit of any of claims 1 to 4, wherein the inner drainage attachment comprises a female attachment surface at an inner periphery thereof.

6. The mechanical ventilation and heat recovery unit of claim 5, wherein the inner drainage attachment includes an end stop against which a drainage pipe can be abutted.

7. The mechanical ventilation and heat recovery unit of any of claims 1 to 6, wherein the inner drainage attachment provides a flow channel of smaller radial dimension than the outer drainage attachment, and acts to guide condensate flow through a central region of a threaded drainage fitting when fitted to the outer drainage attachment.

8. The mechanical ventilation and heat recovery unit of any of claims 1 to 7, wherein the inner drainage attachment is configured for adhesive or solvent welded attachment of a drainage fitting.

9. The mechanical ventilation and heat recovery unit of any of claims 1 to 8, wherein the inner and outer drainage attachments are arranged concentrically.
